# EUROPÄISCHE PATENTSCHRIFT

(11) **EP 2 890 624 B1**
(45) Veröffentlichungstag und Bekanntmachung des Hinweises auf die Patenterteilung: **22.06.2016**
(21) Anmeldenummer: 13749984.4
(22) Anmeldetag: 09.08.2013
(51) Int. Cl.: B65G 47/86, B67C 7/00

(54) **VERFAHREN ZUM GREIFENDEN TRANSPORT VON BEHÄLTERN AN EINER BEHANDLUNGS- UND TRANSPORTVORRICHTUNG SOWIE BEHANDLUNGS- UND TRANSPORTVORRICHTUNG MIT SELBSTADAPTIVEN GREIFELEMENTEN**
METHOD FOR CONVEYING CONTAINERS BY MEANS OF GRIPPERS IN A HANDLING AND TRANSPORT APPARATUS AS WELL AS THE HANDLING AND TRANSPORT APPARATUS WITH SELF-ADAPTIVE GRIPPERS
PROCÉDÉ POUR LE TRANSPORT DE RÉCIPIENTS PAR DES MOYENS DE PRÉHENSION DANS UNE MACHINE DE MANUTENTION ET DE TRANSPORT AINSI QUE LA MACHINE DE MANUTENTION ET DE TRANSPORT MUNIE DE MOYENS DE PRÉHENSION AUTO-ADAPTATIFS

(30) Priorität: 29.08.2012 DE 102012017048
(43) Veröffentlichungstag der Anmeldung: 08.07.2015
(73) Patentinhaber: KHS GmbH, 44143 Dortmund (DE)
(72) Erfinder: FAHLDIECK, Andreas, 55743 Idar-Oberstein (DE)
(86) Internationale Anmeldenummer: PCT/EP2013/002389
(87) Internationale Veröffentlichungsnummer: WO 2014/032762

(56) Entgegenhaltungen:
- DE-U1- 29 607 868
- US-A- 4 651 879
- US-A- 5 743 377

## Beschreibung

Die Erfindung betrifft ein Verfahren zum greifenden Transport von Behältern an einer Behandlungs- und Transportvorrichtung und eine zur Durchführung des Verfahrens eingerichtete Behandlungs- und Transportvorrichtung welche zumindest ein Greifelement zum Halten oder Greifen eines Behälters aufweist wobei der Behälter einen Bauchbereich, kopfseitig eine verschließbare Mündungsöffnung und einen Halsbereich aufweist, und wobei die Vorrichtungen zumindest einen Übergabebereich von einem Transportelement zu einem anderen Transportelement aufweist.

Derartige Greifelemente sind z.B. als mechanisch wirkende Greifklammer bekannt, wobei die Greifkraft mechanisch aber auch mittels Magneten erzeugt werden kann. Die Behandlungs- und Transportvorrichtung weist als Transportelemente z.B. Transportsterne auf, welche beispielhaft als Einleitstern, als Hauptstern und Ausleitstern ausgeführt sind. Zwischen dem Einleitstern und dem Hauptstern und zwischen den Hauptstern und dem Ausleitstern ist der jeweilige Übergabebereich angeordnet, wobei die Behälter von dem Einleitstern an dem Hauptstern und von dem Hauptstern an den Ausleitstern übergeben werden, was aber bekannt ist.

Die DE 10 2005 014 838 A1 betrifft eine Klammer zum Halten von Gefäßen, insbesondere Flaschen in Gefäßtransport- und -behandlungsmaschinen, mit mindestens zwei Klammerarmen, die zum Öffnen und Schließen relativ zueinander beweglich sind, wobei jeder Klammerarm einen Greifarm und mindestens ein Klammerarm einen Gegenarm aufweist. Der Klammerarm, der Greifarm und Gegenarm aufweist, ist einstückig ausgebildet, wobei der Greifarm formstabil und der Gegenarm formelastisch ausgebildet ist. Damit soll eine Klammer zum Halten von Gefäßen bereitgestellt werden, welche die nötige Zentrierung der Gefäße ermöglicht, wobei gleichzeitig Gefäßdurchmessertoleranzen ausgeglichen werden könnten.

Die DE 10 2005 041 929 A1 befasst sich ebenfalls mit einem Greifer für Behälter, insbesondere für Flaschen in Behältertransportsystemen oder Behälterbehandlungsmaschinen, mit mindestens zwei relativ zueinander beweglichen Greifarmen, die durch magnetisch zusammenwirkende Permanentmagneten in Greifrichtung beaufschlagt sind. Es sind gleichzeitig einander abstoßende und einander anziehende Permanentmagneten derart ausgebildet und durch die Arbeitsbewegung des Greifers relativ zueinander bewegbar angeordnet, dass die in Greifrichtung auf die Greifarme wirkende Summe der Abstoß- und Anzugskräfte innerhalb eines vorbestimmten, unterschiedliche Behälter Greifgrößen abdeckenden Greifbereichs im Wesentlichen konstant ist.

Eine Vorrichtung zum Greifen von Behältern und insbesondere von Flaschen mit einem Träger, einer ersten an dem Träger angeordneten Greifeinrichtung mit einem in Richtung eines Außenumfangs des Behälters bewegbaren ersten Greifelements um das Behältnis an einem Außenumfang zu greifen offenbar die DE 10 2007 037 228 A1. Die Vorrichtung weist eine zweite an dem Träger angeordnete Greifeinrichtung auf, die wenigstens abschnittsweise in eine Mündung des Behälters einführbar ist, wobei die zweite Greifeinrichtung ein zweites Greifelement aufweist, das in Richtung eines Innenumfangs des Behältnisses bewegbar ist, um das Behältnis von innen zu greifen. Mit einer solchen Vorrichtung sollen insbesondere Flaschen mit Bügelverschlüssen gegriffen werden können. Je nach dem in welcher Position der Bügelverschluss angeordnet ist, greift entweder das erste Greifelement oder das zweite Greifelement.

Auch die DE 198 08 058 A1 offenbart einen Flaschengreifer bzw. eine Greifvorrichtung für Flaschen, mit zwei Greifarmen, die mit einem Steuernocken in eine Halteposition oder Löseposition bringbar sind, indem der Steuernocken mit einer an jedem Greifarm ausgebildeten Anlagefläche zusammenwirkt. Die Anlagefläche ist jeweils Bestandteil eines elastischen Kissens, das an dem jeweiligen Greifarm angeordnet ist.

Eine in der Praxis bewährte Greifvorrichtung für Flaschen mit zwei Greifarmen, die mittels einer Antriebsvorrichtung zwischen einer die Flaschen zwischen sich festhaltenden Greifstellung und einer die Flasche freigebenden Spreizstellung relativ zueinander schwenkbar sind, wobei durch die Antriebsvorrichtung an einem auf die Greifarme einwirkenden Antriebsteil ein vorbestimmter, konstanter Verstellweg vorgegeben ist, offenbart die DE 198 30 456 B4. Die Greifarme sind vorteilhaft unter Zwischenschaltung zumindest eines elastisch verformbaren Pufferelementes mit dem Antriebsteil gekoppelt, wobei das Antriebsteil unter Belassung eines Zwischenraums in eine Ausnehmung eines Greifarms eingreift und, wobei das Pufferelement den Zwischenraum zumindest teilweise ausfüllt.

Auch das Deutsche Gebrauchsmuster DE 20 2005 002 924 U1 offenbart einen Klammergreifer für ein Gefäßtransportsystem, insbesondere für ein Flaschentransportsystem mit zwei Greifarmen, wobei auch hier ein Kraftspeicher mit mindestens ein Paar einander abstoßender Permanentmagneten vorgesehen ist.

Die gattungsgemäße US 5,743,377 A offenbart ein weiteres Greifelement mit zwei verschwenkbaren Klammerarmen zum Erfassen eines Behälters, insbesondere einer Flasche. Zum Positionieren der Klammerarme ist ein die Klammerarme in eine Schließposition drängender Spreizkörper angeordnet. Der Spreizkörper kann mehrere selbsthemmende Positionen einnehmen.

Aus einem anderen Bereich der Technik ist zum Beispiel ein "Bionischer Handling Assistent", also ein Roboterarm bekannt, welcher die Errungenschaften der Natur mit der Technik (Bionik) verbindet. Der Roboterarm weist eine künstlich angetriebene Kraftübertragungsstruktur auf, welche endseitig drei angetriebene Greiffinger zum Greifen von Gegenständen aufweist. Die Kraftübertragungsstruktur kann Bewegungen ähnlich denen eines Elefantenrüssels durchführen. Bekannt ist auch der FinRay-Effekt®, welcher eine zweischichtige Struktur beschreibt, die durch Krafteinsatz gerichtete Verformungen durchmacht, z.B. im Angriffspunkt ausweicht und sich der Krafteinwirkung an den Enden der Konstruktion entgegen biegt. So findet eine Formanpassung statt, wobei Punktlasten vermieden werden. Der Effekt ist zum Beispiel für Stuhllehnen bekannt. Die zuvor genannten Greiffinger können so ausgeführt sein, dass diese einen zu greifenden Gegenstand kraft- und formschlüssig flexibel umgreifen. Ein aus zwei Greiffingern gebildetes Greifelement nach dem FinRay-Effekt ® ist zum Beispiel in der EP 1 203 640 A2 offenbart, wobei das Greifelement Gegenstände behutsam greifen soll. Die EP 1 040 999 A2 beschäftigt sich ebenfalls mit einem den FinRay-Effekt® ausnutzenden Gegenstand.

In der DE 10 2007 017 416 B3 ist eine Sortiervorrichtung mit einer zweidimensionalen Kraftübertragungsstruktur offenbart, wobei in der DE 10 2009 015 977 A1 eine Antriebsvorrichtung mit einer drei-dimensionalen Kraftübertragungsstruktur beschrieben ist. Die DE 10 2005 010 380 A1 offenbart ein Greifwerkzeug mit selbstadaptiver Kinematik, wobei die DE 203 18 845 U1 eine dazu ähnliche Handhabevorrichtung, also Greifvorrichtung für dreidimensionale Objekte beschreibt. In der bisher unveröffentlichten DE 10 2011 013 299.6 der Anmelderin ist ein selbstadaptives Greifelement beschrieben. Nachfolgend sollen als grundsätzliche Definition und technische Beschreibung eines selbstadaptiven Greifers oder Greiffingers, die Ausführungen der DE 203 18 845 U1 und DE 10 2005 010 380 A1 dienen, die hiermit zur Offenbarung dieser Anmeldung gemacht werden, sofern nachfolgend keine Ergänzungen oder Abweichungen formuliert werden.

Eingangs genannte Behälter können beispielsweise als Flaschen für Flüssigkeiten, beispielsweise für Getränke verwendet werden. Die Behälter z.B. Flaschen können beispielsweise aus Glas oder aus Kunststoff, z.B. PET bestehen. Denkbar ist aber auch, dass die Behälter aus anderen Materialien bestehen und mit anderen Füllgütern befüllbar sind.

Bekannte Behälterbehandlungsvorrichtungen sind zum Beispiel Rinser, Füller, Verschließer, Etikettiermaschinen, Inspektionsmaschinen, und dergleichen, wobei Behälterbehandlungsvorrichtungen bzw. -transportvorrichtungen rotierender oder linearer Bauart sein können, wobei beide Bauarten bevorzugt umlaufende Haltevorrichtungen aufweisen. Beispielsweise eine Etikettiermaschine weist einen Einlaufstern, einen Hauptstern, an welchen unterschiedliche Aggregate angeordnet sein können, und einen Auslaufstern auf, was an sich bekannt ist, und oben bereits erwähnt wurde.

An den Behandlungs- und Transportvorrichtungen für Behälter werden die jeweiligen Behälter an den Haltevorrichtungen, also an den Greifelementen entlang der Transportrichtung gehalten. Dazu werden die Behälter, also z.B. die Flaschen beispielsweise im Mündungsbereich mittels der Haltevorrichtungen gehalten, wobei die Behälter, also z.B. die Flaschen auf Standvorrichtungen wie z.B. Drehtellern aufstehen können, oder aber auch schwebend transportiert werden können. Die Behälter können natürlich auch im Bauchbereich gehalten sein.

Die Behälter können also Bereiche mit unterschiedlichen Durchmessern aufweisen. Beispielsweise hat eine Flasche an ihrem Bauchbereich einen größeren Durchmesser als an ihrem Mündungsbereich und als an ihrem Halsbereich. Die jeweiligen Haltevorrichtungen sind in ihren Dimensionen daher jeweils an den jeweiligen Haltezweck, also an den jeweils zu transportierenden bzw. zu haltenden Behälter bzw. an den anzugreifenden Behälterbereich angepasst ausgeführt. Sollen andere Behälter mit abweichenden Dimensionen gehalten werden, bedarf es einer Umrüstung der betreffenden Behandlungs- bzw. -transportvorrichtung auf angepasste Haltevorrichtungen oder eine entsprechende Einstellung der bereits vorhandenen Haltevorrichtungen. Beides, also die Umrüstung als auch das Einstellen ist nicht nur zeitund somit personalkostenintensiv, sondern führt auch zu einem erheblichen Produktionsausfall. Um die Flasche beim Greifen oder Halten nicht zu deformieren oder gar zu zerstören werden zudem Anstrengungen unternommen, die einem solchen Fall gegenwirken sollen.

Hierbei können Steuerelemente vorgesehen sein, welche ein weiteres Zusammenbewegen der gegenüberliegenden Greifelemente verhindern, wenn z.B. ein Greifelement anstelle der Abmessungen für den Bauchbereich die Abmessungen des Halsbereiches aufwiese. Ein weiteres Problem besteht darin, dass die Behälter bei der Übergabe von einem Transportelement auf das andere, nachfolgende Transportelement höchst präzise geführt sein müssen, was einen erheblichen Steueraufwand bedeutet.

Von daher liegt der Erfindung die Aufgabe zugrunde, ein Verfahren und eine Behandlungs- und Transportvorrichtung der Eingangs genannten anzugeben, bei welcher Behälter in einem großen Abmessungsbereich mit demselben Greifelement gehalten oder transportiert werden, ohne dass Umrüstungsaufwand anfällt, wobei noch dazu sichergestellt sein soll, dass der Behälter unversehrt verbleibt, auch wenn das Greifelement an einen nicht vorgesehenen Bereich angreift, wobei zudem der Steueraufwand bei der Übergabe der Behälter von einem Transportelement auf das andere, nachfolgende Transportelement reduziert werden soll.

Erfindungsgemäß wird die Aufgabe durch ein Verfahren mit den Merkmalen des Anspruchs 1 beziehungsweise mit einer Behandlungs- und Transportvorrichtung für Behälter mit den Merkmalen des Anspruchs 2 gelöst. Weitere, besonders vorteilhafte Ausgestaltungen der Erfindung offenbaren die Unteransprüche.

Es ist darauf hinzuweisen, dass die in der nachfolgenden Beschreibung einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Erfindungsgemäß umfasst eine Behandlungs- und Transportvorrichtung zumindest ein Greifelement zum Halten oder Greifen eines Behälters, wobei der Behälter einen Bauchbereich, kopfseitig eine verschließbare Mündungsöffnung und einen Halsbereich aufweist, und wobei die Vorrichtungen zumindest einen Übergabebereich von einem Transportelement zu einem anderen Transportelement aufweist. Vorteilhaft ist vorgesehen, dass das Greifelement mindestens zwei Greiffinger umfasst, welche je ein beispielsweise starres Basiselement und einen bevorzugt selbstadaptiven Greifbereich aufweisen, wobei der Greifbereich an dem radial außen liegenden Ende des Basiselementes angeordnet ist, und wobei an dem dazu gegenüberliegenden Ende des Basiselementes ein Steuerelement angeordnet ist, und, dass an dem Greifbereich beabstandet zur Basis Krafteinleitungselemente so zu dem Steuerelement angeordnet sind, dass das Steuerelement mit einer im Übergabebereich angeordneten Steuerschiene kontaktiert, wobei die Krafteinleitungselemente bevorzugt an der dazu gegenüberliegenden Seite der Steuerschiene angeordnet sind.

Mit der Erfindung wird so eine Behandlungs- und Transportvorrichtung für Behälter erreicht, bei welcher Behälter in einem großen Abmessungsbereich mit demselben Greifelement gehalten oder transportiert werden, ohne dass bei einem Behälterwechsel Umrüstungsaufwand anfällt, wobei noch dazu sichergestellt ist, dass der Behälter unversehrt verbleibt, auch wenn das Greifelement an einen nicht vorgesehenen Bereich angreift. Da das Greifelement, also bevorzugt der Greifbereich in besonders sinnvoller Weise selbstadaptiv ist, also den Behälter an seine Abmessungen angepasst umgreift, aber mit genügender Kraft zum Halten und Transportieren umschließt, ist sichergestellt dass der Behälter nicht deformiert wird, wobei ebenfalls der sichere Transport entlang der Behandlungs- und Transportvorrichtung erreicht ist. Zudem ist durch die besonders vorteilhafte Anordnung der Krafteinleitungselemente und des Steuerelementes im Zusammenwirken mit der Steuerschiene der Steueraufwand zur Übergabe der Behälter von einem Transportelement auf das andere, nachfolgende Transportelement erheblich reduziert, da sich der bevorzugt selbstadaptive Greifbereich durch die Krafteinleitung der Krafteinleitungselemente in seine Halteposition bzw. in seine Übernahme- oder Übergabeposition bewegt, indem das Steuerelement quasi als Widerlager an der einen Seite der Steuerschiene anliegt, und so die Krafteinleitungselemente an der dazu gegenüberliegenden Seite der Steuerschiene anliegend zwingt, die notwendige Betätigungskraft zum selbstadaptiven Verändern der Position des Greifbereiches in diesen einzuleiten.

Der Greifbereich kann in zweckmäßiger Ausgestaltung pfeilspitzenartig, oder kegelförmig mit einer breiten Basis und einem dazu gegenüberliegenden freien Ende ausgeführt sein. Das freie Ende kann spitz zulaufend oder abgestumpft ausgeführt sein. Zielführend ist, wenn sich von der Basis ausgehend in Richtung zum freien Ende jeweils die Außenflanke und die Innenflanke erstreckt, wobei Gelenkstreben vorgesehen sind, welche sich bevorzugt parallel zur Basis verlaufend zwischen beiden Flanken erstrecken. Die Streben verbinden die Flanken gelenkig, wobei die Flanken alternierend Zug- oder Druckflanken bilden. So ist ein Körpergerüst gebildet, welches in Aufsicht gesehen an seinen Ober- und Unterseiten geöffnet sein kann, und an seinen Flanken, also an seinem Wirkflächen mantelartig geschlossen ist. Möglich ist natürlich die Ober- und/oder Unterseite mit entsprechendem Material abzudecken.

Günstig ist, wenn, wie bereits oben erwähnt, der Greifbereich mit seiner Basis mit dem Basiselement in Verbindung steht. Beispielsweise könnte das Basiselement an einem Transportstern angeordnet sein, wobei das freie Ende des Greifbereiches von dem Transportstern weg orientiert ist. Das Basiselement kann dazu mit einem Befestigungselement ausgeführt sein, welches leicht mit einem korrespondierenden Gegenbefestigungselement des Sterns verbindbar ist. In bevorzugter Ausgestaltung weist das Basiselement eine Schwenkachse auf, so dass das Greifelement, also das Basiselement mit dem Greifbereich um diese schwenken kann. So kann der Greifbereich entweder mit seiner Außenflanke oder mit seiner Innenflanke an das betreffende Krafteinleitungselement in Kontakt treten, so dass die Betätigungskraft mit zunehmender Kontaktkraft immer stärker werdend eingeleitet wird.

Das Umschlingen und Umgreifen eines Behälters oder Containers wird dann im Fall eines selbstadaptiven Greiffingers durch die Kontur des Behälters selbst zusätzlich induziert.

Wie bereits beschrieben, ist in bevorzugter Ausführung der Greifbereich selbstadaptiv. Dies bedeutet im Sinne der Erfindung, dass bei einem Kontakt mit einem Behälter, also zum Beispiel bei einem Kontakt mit einer Flasche eine Druckkraft auf die entsprechende Innenflanke des Greifbereiches ausgeübt wird, wobei der Kontaktbereich des Greifbereiches der Druckkraft ausweicht, und das freie Ende aber auch die Basis, also die kontaktfreien Bereiche des Greifbereiches sich jeweils in Richtung zum Behälter entgegen bewegen. Eine jeweils gleichgerichtete Bewegung führt die jeweilige Außenflanke durch. So ist der Behälter lagesicher auf seinem Transportweg gehalten. Erkennbar ist der Vorteil, dass der Greifbereich sich dabei selbsttätig an den jeweiligen Durchmesser anpasst, so dass Behälter unterschiedlicher Dimension mit jeweils gleichen Greifbereichen lagesicher gehalten werden können. Der gleiche Effekt tritt aber auch bei dem Kontakt der Innen- und Außenflanke mit den betreffenden Krafteinleitungselementen auf um die Halteposition, die Übergabeoder Übernahmeposition oder die Zwischenposition zu erreichen, wobei die Krafteinleitungselemente auch als Anschläge bezeichnet werden können.

In günstiger Ausgestaltung ist das Greifelement aus einem Paar sich gegenüberliegender Greiffinger gebildet, welche jeweils das Basiselement und den Greifbereich, also den jeweils selbstadaptiven Greifbereich aufweisen, wobei der Greifbereich mit seiner jeweiligen Innenflanke zur Innenflanke des jeweils zugeordneten Greifbereiches orientiert ist. Bezogen auf eine Spiegelachse sind die beiden Greiffinger spiegelbildlich zueinander angeordnet. Das bedeutet im Sinne der Erfindung, dass die in Aufsicht gesehen quasi L-förmgen Greiffinger mit ihrem als Quersteg ausgeführten Basiselement entgegengesetzt orientiert sind. So ist einer der Greiffinger bezogen auf die Transportrichtung vorlaufend, während der andere Greiffinger des Greiffingerpaares nachlaufend ist.

Vorteilhaft ist, dass innerhalb des Übergabebereiches lediglich einer der selbstadaptiven Greifbereiche jeweils in die sichelartig gebogene Übernahmeposition oder Übergabeposition überführt werden muss, wobei der andere Greifbereich lediglich in einer Zwischenposition angeordnet sein muss.

Zweckmäßiger Weise ist die Steuerschiene ortsfest in dem Übergabebereich angeordnet, und leicht gekrümmt ausgeführt. Erreicht nun der vorlaufende Greiffinger diese, gelangt das Steuerelement in Kontakt mit der Steuerschiene. Das Steuerelement kann in sinnvoller Ausgestaltung als Führungsrolle in Form eines gelagerten Rollrades ausgeführt sein und entlang der Steuerschiene abrollen. Von dem vorlaufenden gelangt zuerst das Steuerelement an die Steuerschiene, wobei nachfolgend erst das äußere Krafteinleitungselement an der zum Steuerelement gegenüberliegenden Seite der Steuerschiene mit dieser in Kontakt kommt, so dass das äußere Krafteinleitungselement die notwendige Kraft zum Öffnen oder Lösen des selbstadaptiven Greifbereiches aus der Halteposition einleitet. Der selbstadaptive Greifbereich wird dabei in die sichelartig gebogene Öffnungsposition überführt. Bei dem nachfolgenden Greiffinger gelangt entsprechend zunächst das innere Krafteinleitungselement in Kontakt mit der Steuerschiene, so dass die notwendige Kraft zum Öffnen in die Innenflanke eingeleitet wird, so dass der selbstadaptive Greifbereich in die sichelartig gebogene Öffnungsposition überführt wird. Zur Übernahme oder zur Übergabe ist jedoch nur notwendig, wenn der Greifbereich des vorlaufenden Greiffingers in der sichelartig geöffneten Position angeordnet ist.

Günstig ist, wenn die Steuerschiene des Übergabebereiches in ihrer Erstreckung so ausgeführt ist, dass nur einer der Greiffinger in Kontakt mit der Steuerschiene ist, so dass auch nur einer der Greifbereiche in der sichelartig geöffneten Position angeordnet ist. Der andere Greifbereich ist dann in der Zwischenposition angeordnet, in welcher der Greifbereich mit seiner Mittelachse linear, also gerade verlaufend angeordnet ist. Natürlich kann die Steuerschiene in ihrer Erstreckung auch so ausgeführt sein, dass Greiffinger des betreffenden Paares in Kontakt mit der Steuerschiene sind, so dass dann beide Greifbereiche in der sichelartig geöffneten Position sind, wobei die freien Enden aber in günstiger Wirkung entgegen gesetzt von einander weg orientiert gebogen sind.

Zweckmäßig ist, wenn noch ein Aufnahmeelement vorgesehen ist, an welchem der zwischen den beiden Greiffingern gehaltene bzw. angeordnete Behälter anliegt. Das Aufnahmeelement kann dazu eine entsprechend verrundete Vertiefung aufweisen. Das Aufnahmeelement kann auch so ausgeführt sein, dass dieses den Behälter aus dem Greifelement herausbefördert, wobei durch Krafteinwirkung des Behälters der selbstadaptive Greifbereich entsprechend ausweicht. Unterstützt oder auch bewirkt wird das Öffnen der Greifbereiche mittels der zusammenspielenden Komponenten, also der Steuerschiene, dem Steuerelement und den Krafteinleitungselementen.

Zweckmäßig ist, wenn das jeweilige Transportelement noch eine stationäre Führungsbahn hat, an welcher die Steuerelemente relativ dazu entlang bewegt also z.B. abrollen können. So wird vorteilhaft erreicht, dass sich die Greifbereiche selbstadaptiv durch Krafteinleitung der Krafteinleitungselemente und/oder des Behälters in die Innenflanke in der Halteposition verbleiben. Die Greiffinger sind zielführend bevorzugt über die Basiselemente mit dem Transportelement verbunden und werden mit diesem zusammen bewegt, so dass sich jeweils die Relativbewegung zum einen zur Steuerschiene und zum anderen zur Führungsbahn ergibt, so dass die entsprechende Wirkung auf die selbstadaptiven Greifbereiche ausgeübt wird. Die stationäre Führungsbahn ist bevorzugt umlaufend, weist aber im Übergabebereich eine Unterbrechung auf, da hier die Steuerschiene angeordnet ist

Im Folgenden wird die geöffnete Position zum einen als Aufnahmeposition oder Übernahmeposition und zum anderen als Abgabe- oder Übergabeposition bezeichnet. In der Aufnahmeposition übernehmen die beiden Greiffinger einen Behälter in einem Einschub, wobei der erste Greifbereich sichelartig gebogen ist und transportiert diesen entlang der Transportrichtung zu einem Ausschub, in welchem eine Abgabeposition vorliegt, in welchem der andere Greifbereich sichelartig gebogen ist, und der erste in der Zwischenposition angeordnet ist. Zwischen der Übernahme und der Übergabe sind die Greifbereiche natürlich in der Halteposition angeordnet. Erkennbar ist hier der Vorteil, dass die freien Enden durch die sichelartige Biegung so eine große, quasi trichterförmige Ein- bzw. Ausschuböffnung freigeben, an welcher der Behälter störungsfrei vorbeigeführt, insbesondere ein- oder ausgeschoben werden kann. Sinnvoll ist daher, wenn das Greifelement zur Freigabe des Behälters durch entsprechende Krafteinwirkung selbstadaptiv in die Übernahme- bzw. Übergabeposition gebracht wird. Dies kann mit den entsprechenden Krafteinleitungselementen erreichbar sein, welche an den Innen- und Außenflanken einwirken.

Durch die Krafteinleitungselemente ist der bekannte selbstadaptive Effekt des Greifers eingeschränkt, insbesondere wenn dieser kaum oder nicht nachgiebig ausgeformt ist. Somit besteht eine Verbesserung darin, die selbstadaptiv Funktion und Wirkweise zu erhöhen und den Behälter als formverändernder Anschlag stärker zu nutzen, wenn entweder mindestens die inneren Krafteinleitungselement entgegen einer Federkraft durch den verschwenkten Greiffinger verschieblich gelagert sind oder zwischen dem Basiselement und dem Steuerelement ein in engen Grenzen flexibles Zwischenstück vorgesehen wird bzw. das Basiselemente selbst flexibel ausgestaltet ist, z.B. weil es aus einem flexiblen Material besteht. Auf diesem Wege ist eine erhöhte selbstadaptive Anpassung an unterschiedliche Flaschendurchmesser möglich.

Möglich ist aber, wenn der Behälter mit geeigneten Maßnahmen, z.B. mittels des Aufnahmeelementes aus den umfassenden Greifelementen herausgeführt wird. So kann die Druckkraft des sich ausschiebenden Behälters auf die Innenflanke die entsprechende Verformung des Greifelementes, entgegen der Halteposition bewirken. Durch das Einleiten gelangt der Behälter in Kontakt mit der jeweiligen Innenflanke, so dass sich zumindest beide freie Enden wieder auf einander zu bewegen, so dass der Behälter lagesicher transportiert werden kann. Die Betätigungskraft wird dabei durch Abrollen der Steuerelemente entlang der stationären Führungsbahn erfolgen, wobei die Greiffinger um die Schwenkachse verschwenkt an die Krafteinleitungselemente gedrückt werden, so dass die Behälter lagesicher entlang des Transportweges gehalten sind. Alternativ kann natürlich eine vergleichbare linear verschiebbare Lagerung vorgesehen werden, welche den Greiffinger in analoger Weise in Anlage an Krafteinleitungs- oder Anschlagselemente heranführt.

Möglich ist, wenn das Greifelement, also der Greifbereich unter Verzicht auf einen Antrieb, also nur mittels Krafteinleitung des ein- bzw. ausschiebenden Behälters sich jeweils selbstadaptiv an die gewünschten Haltebereich anlegt, bzw. in die Übernahme- oder Übergabeposition, in die Halteposition oder in die Zwischenposition bewegt, was durch das Zusammenspiel der Komponenten, also mit dem Zusammenspiel der Führungsbahn und dem Steuerelement erreicht wird.

Erkennbar ist der Vorteil der Erfindung, dass sich das selbstadaptive Greifelement an unterschiedlich dimensionierte Haltebereiche anpassen kann, so dass kleinere aber auch umfangreiche Umrüst- und/oder Einstellarbeiten entfallen können.

Die Greifelemente können entweder an dem Mündungsbereich des Behälters, also z.B. im Neckbereich, im Halsbereich oder im Bauchbereich angreifen, wobei aber auch alle anderen Behälterbereiche zum Angreifen der Greifelemente möglich sind. Zumindest die Innenflanken, aber natürlich auch die Außenflanken können aus geeignetem Material wie insb. ein Gummi-Werkstoffe, bspw. PU, HNBR oder EPDM etc., welche einen hohen Reibwert aufweisen. Abhängig von der einzelnen Halte- und Transportaufgabe sind aber auch Federstähle oder weiche Kunststoffe wie PVDF möglich.

In möglicher Ausgestaltung können zumindest die Innenflanken schichtartig aufgebaut sein, wobei zwei oder mehr Schichten vorgesehen werden können. Beispielweise könnte die zum Inneren des Körpers weisende Seite, also die innere bzw. innerste Schicht Erhöhungen und Vertiefungen aufweisen um eine verbesserte Beweglichkeit, also Reaktion auf die einwirkenden Druckkräfte zu erreichen. Möglich ist aber auch, die innere bzw. innerste Schicht dehnbarer bzw. flexibler auszuführen als die Schicht welche unmittelbar mit dem Behälter in Kontakt ist.

In einer weiteren vorteilhaften Ausführungsvariante, die ggf. mit einem oder mehreren der vorgenannten Elemente zu kombinieren ist, wird mindestens die Innenflanke eines oder beider Greiffinger radial in zwei oder mehr Abschnitte eingeteilt. Hierbei ist der radial innere erste Abschnitt mindestens teilweise mit einem härteren und/oder starreren Material belegt oder aus diesem gebildet (Federstahl, PET, PEEK etc.) als der radial äußere Abschnitt (Spitze des Greiffingers), der mindestens teilweise aus einem weicheren oder elastischeren Material gebildet ist, wie bspw. einem Gummimaterial, wie PU, EPDM (Ethylen-Propylen-Dien-Monomer/- Kautschuk), HNBR (Hydrierter Acrylnitrilbutadien-Kautschuk), FPM, FLM (Fluorkautschuk) etc. oder auch einem geeigneten Kunststoff.

Somit kann in der radial äußeren Spitze des Greiffingers beim Erfassen eines Gegenstandes der selbstadaptive Effekt stärker zum Tragen kommen, wobei der mechanisch und durch Reibung stark beanspruchte Kontaktbereich mit der Krafteinleitungs- bzw. Anschlagelementen der Greiffinger, genau hierfür optimiert ist.

Diese radiale Abschnittsbildung kann auch über unterschiedliche Materialstärken der betroffenen Greiffingerflanken erreicht werden, z.B. indem die Materialstärke der Greiffingerflanke in radialer Richtung kontinuierlich oder abschnittsweise von innen nach außen abnimmt.

Weitere vorteilhafte Ausgestaltungen der Erfindung sind in den Unteransprüchen und der folgenden Figurenbeschreibung offenbart. Es zeigen
- Fig. 1 und Fig. 1a: prinzipiell eine Behälter- und Transportvorrichtung in Aufsicht,
- Fig. 2: ein Greiffingerpaar als Einzelheit, bei welchem der vorlaufende Greiffinger in Kontakt mit der Steuerschiene ist in einer Aufsicht,
- Figur 3: das Greiffingerpaar aus Figur 2 als Einzelheit,- in Seitenansicht,
- Fig. 4: das Greiffingerpaar mit in Zwischenposition angeordneten Greifbereichen in Aufsicht,
- Fig. 5: die Situation aus Figur 4 in Seitenansicht,
- Fig. 6: das Greiffingerpaar mit in Halteposition angeordneten Greifbereichen in Aufsicht, und
- Fig. 7: die Situation aus Figur 6 in Seitenansicht.

In den unterschiedlichen Figuren sind gleiche Teile stets mit denselben Bezugszeichen versehen, weswegen diese in der Regel auch nur einmal beschrieben werden.

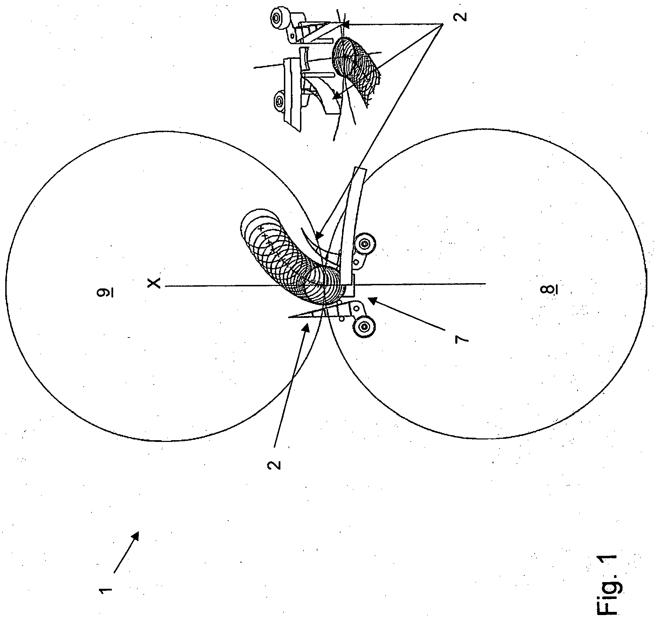

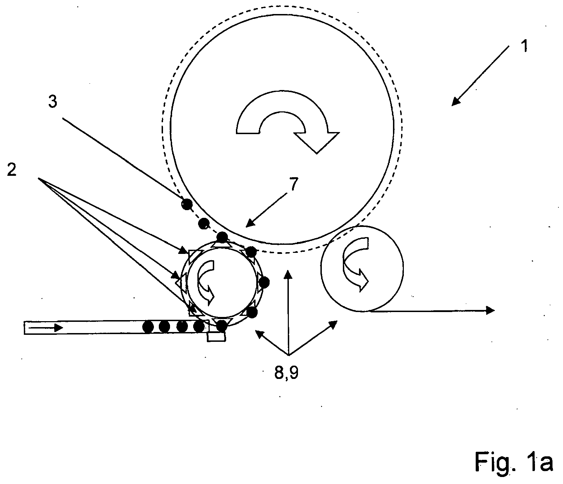

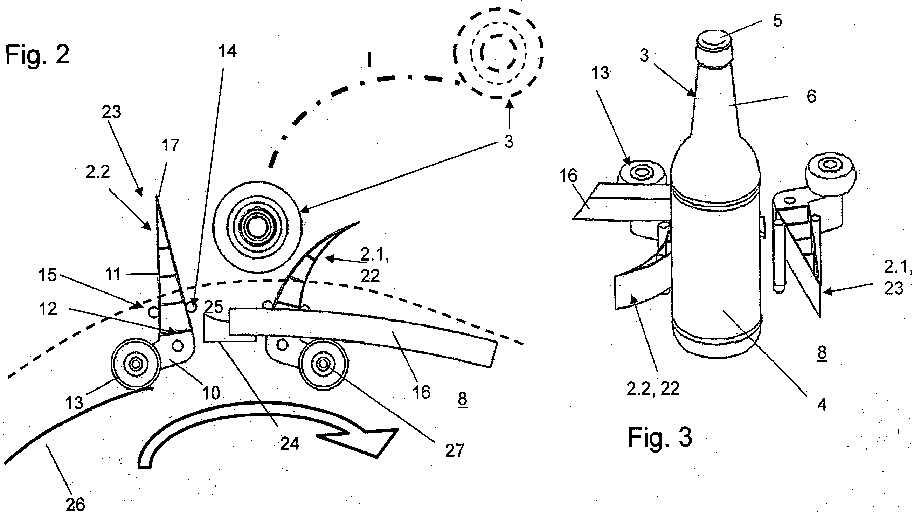

Figur 1 zeigt eine Behandlungs- und Transportvorrichtung 1 mit zwei um eine vertikale Achse rotierenden Transportelementen 8,9 in Form von Transportsternen oder -rädern, welche eine Mehrzahl von umlaufenden und bevorzugt selbstadaptiven Greifelementen 2 zum Halten oder Greifen von jeweils einem Behälter 3 aufweist, wobei der Behälter 3 einen Bauchbereich 4, kopfseitig eine verschließbare Mündungsöffnung 5 und einen Halsbereich 6 (Figur 3) aufweist, und wobei die Vorrichtung 1 zumindest einen Übergabebereich 7 von einem Transportelement 8 zu einem anderen Transportelement 9 aufweist. Die mittels einer von Vielzahl von Kreisen dargestellten Flaschen beschreiben die Bewegungsbahn einer eintauchenden Flasche relativ zu Stern 8. Hierbei kann insgesamt im Zusammenhang mit dieser Lösung unter Transportelement auch eine Behandlungsvorrichtung wie bspw. ein Füller, Verschließer, Rinser oder dergleichen verstanden werden.

Vorteilhafterweise ist in dem gezeigten Beispiel vorgesehen, dass das Greifelement 2 zwei einander gegenüberliegender und identisch ausgeführter Greiffinger 2.1 und 2.2 aufweist, welche jeweils ein starres Basiselement 10 und einen bevorzugt selbstadaptiven Greifbereich 11 aufweisen, wobei der selbstadaptive Greifbereich 11 mit seiner Basis 12 an dem radial äußeren Ende des Basiselementes 10 angeordnet ist. An dem gegenüberliegenden Ende des Basiselementes 10 ist ein Steuerelement 13, hier in Form eines gelagerten Rollrades angeordnet, welches im Zusammenwirken mit einer nur im Übergabebereich 7 angeordneten Steuerschiene 16 die Schwenkbewegung des jeweiligen Greiffingers 2.1 und 2.2 veranlasst. Dabei sind auf dem Transportelement 8 auf Höhe des selbstadaptiven Greifbereiches 11 und beabstandet zur Basis 12 beidseitig umlaufende Krafteinleitungselemente 14,15 so zueinander angeordnet sind, dass bei einer Schwenkbewegung des Greiffingers 2.1 oder 2.2 mittels des Steuerelementes 13 und des Basiselementes 10 durch Zusammenwirken mit der im Übergabebereich 7 angeordneten Steuerschiene 16 eine Seite des selbstadaptiven Greifbereiches 11 gegen eines der Krafteinleitungselemente 14 oder 15 gedrückt wird und somit abhängig von der vorherigen Schwenkbewegung um die Basis 12 eine sichelartige Öffnungs- oder Schließbewegung und/oder Öffnung- oder Schließverformung vollzieht, relativ zum gegenüberliegenden Greiffinger 2.1 oder 2.2 und idealerweise vollständig unabhängig und entkoppelt von der Stellung und/oder Bewegung des anderen Greiffingers 2.1 oder 2.2. Die Krafteinleitungselemente 14,15 stellen also passive Anschläge dar. Jeder Greiffinger 21. und 2.2, also das jeweilige Basiselement 10 ist in einer Ausführungsvariante an einer Schwenkachse schwenkbar gelagert.

Der Behälter 3 ist in Figur 1 symbolhaft als aneinander Reihung von Kreisen dargestellt, um eine kreisabschnittsartige Bewegungsbahn des Behälters in das Greifelement 2 hinein und/oder aus diesem heraus anzudeuten, wie beispielsweise in Figur 2 anhand der strichpunktierten Linie l zu erkennen ist. Die Transportelemente 8 oder 9 können als Einleitstern, Hauptstern oder als Ausleitstern bezeichnet werden. Figur 1a zeigt die Behandlungs- und Transportvorrichtung 1 mit einem Einleitstern, einem Hauptstern und einem Ausleitstern. Die Greifelemente 2 sind prinzipiell als ungefüllte Dreiecke dargestellt. Die Behälter werden dem Einleitstern über einen Linearförderer oder einen anderen Transportstern zugeführt.

Wie dargestellt ist das Greifelement 2 aus zwei Greiffingern 2.1 bzw. 2.2 gebildet, welche identisch ausgeführt und einander gegenüberliegend angeordnet sind, sowie bezogen auf eine in Figur 1 angedeutete Spiegelachse X spiegelbildlich angeordnet sind, so dass ein Greiffingerpaar gebildet ist, von dem eine Vielzahl an der Behandlungs- und Transportvorrichtung vorgesehen sind.

Im Folgenden wird nur einer der Greiffinger 2.1 oder 2.2 beschrieben, wobei der andere wie bereits gesagt identisch ausgeführt ist.

Der Greiffinger weist das Basiselement 10 und den selbstadaptiven Greifbereich 11 auf. Der Greifbereich 11 ist in Aufsicht gesehen kegelförmig ausgeführt, und weist die Basis 12 und ein beispielhaft spitz ausgeführtes freies Ende 17 auf. Mit der Basis 12 ist der Greifbereich 11 mit dem Basiselement 10 verbunden. Gegenüberliegend zum Greifbereich 11 ist das Steuerelement 13 angeordnet. Das Steuerelement 13 ist beispielhaft als gelagerte Rolle ausgeführt. Der jeweilige Greifbereich 11 weist eine Innenflanke 18 und eine Außenflanke 19 auf, wobei die Innenflanke 18 zu dem anderen Greiffinger orientiert ist. Zwischen den Flanken 18 und 19 sind Gelenkstreben 20 angeordnet.

Die Krafteinleitungselemente 14 und 15 sind in Richtung zum freien Ende 17 beabstandet zur Basis 12 zum einen an der Innenflanke 18 und zum anderen an der Außenflanke 19 angeordnet.

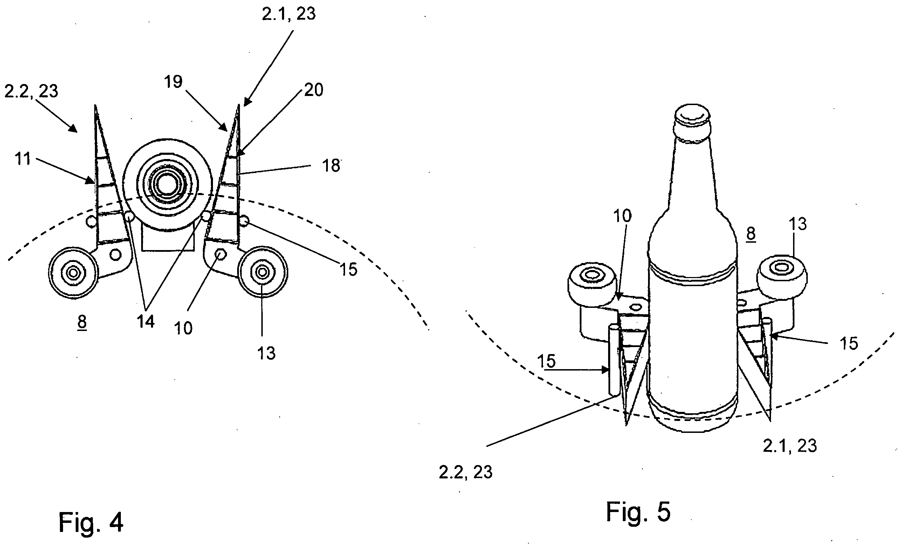

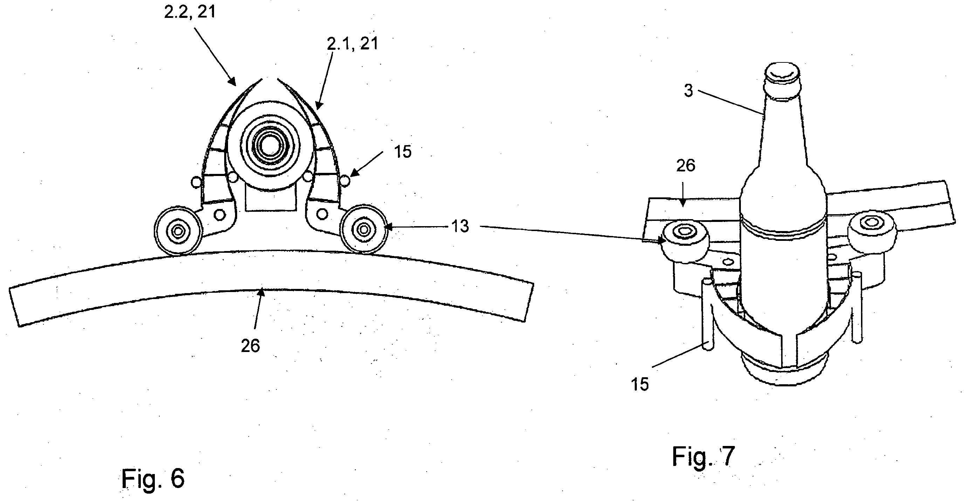

Der Greifbereich 2 ist stufenlos durch Krafteinwirkung in eine Halteposition 21 (Figur 6) und in eine geöffnete Position 22, also in Übernahme- oder Übergabeposition überführbar (Figuren 2 und 3), wobei zwischen den extremmöglichen Positionen 21 und 22 noch eine Zwischenposition 23 (Figuren 4 und 5) definierbar ist.

Die Steuerschiene 16 ist ortsfest in dem Übergebebereich 7 angeordnet, und entsprechend dem Sterndurchmesser gebogen ausgeführt. Von dem vorlaufenden Greiffinger 2.2 gelangt zuerst dessen Steuerelement 13 an die Steuerschiene 16, wobei nachfolgend erst das äußere Krafteinleitungselement 15 an der zum Steuerelement 13 gegenüberliegenden Seite der Steuerschiene 16 mit dieser in Kontakt kommt, so dass wie in Figuren 2 und 3 gezeigt, das äußere Krafteinleitungselement 15 die notwendige Kraft zum Öffnen oder Lösen des selbstadaptiven Greifbereiches 11 einleitet. Diese Öffnungsbewegung muss natürlich nicht vorgesehen werden, stellt aber ein Vorteilhafte Variante dar, um engere Anordnungen oder einen steileren Einlaufwinkel der Behälter zu ermöglichen. Der selbstadaptive Greifbereich 11 wird dabei in die sichelartig gebogene Öffnungsposition 22 überführt. Bei dem nachfolgenden Greiffinger 2.1 gelangt entsprechend zunächst das innere Krafteinleitungselement 14 in Kontakt mit der Steuerschiene 16, so dass die notwendige Kraft zum Öffnen in die Innenflanke 18 eingeleitet wird, so dass der selbstadaptive Greifbereich 11 in die sichelartig gebogene Öffnungsposition 22 überführt wird. Zur Übernahme oder zur Übergabe ist jedoch nur notwendig, wenn der Greifbereich 11 des nachlaufenden Greiffingers 2.1 in der sichelartig geöffneten Position angeordnet ist.

In den Figuren 1 bis 3 sind die Steuerschienen 16 und 26 relativ zum Behälter 3 und der Greifer 2.1, 2.2 nicht insgesamt maßstabsgerecht dargestellt.

Bevorzugter weise ist die Steuerschiene 16 in deren Erstreckung so ausgeführt ist, dass nur einer der Greiffinger 2.1 oder 2.2 in Kontakt mit der Steuerschiene 16 ist, so dass auch nur einer der Greifbereiche 11 in der sichelartig geöffneten Position 22 angeordnet ist. Der andere Greifbereich 21 ist dann in der Zwischenposition 23 angeordnet, in welcher der Greifbereich 11 mit seiner Mittelachse linear, also gerade verlaufend angeordnet ist. Natürlich kann die Steuerschiene 16 in ihrer Erstreckung auch so ausgeführt sein, dass Greiffinger 2.1 und 2.2 des betreffenden Paares in Kontakt mit der Steuerschiene 16 sind, so dass dann beide Greifbereiche 11 in der sichelartig geöffneten Position sein können, wobei die freien Enden 17 aber in günstiger Wirkung entgegen gesetzt von einander weg orientiert gebogen sind.

Wie in den Figuren 2, 4 und 6 erkennbar, ist ein Aufnahmeelement 24 vorgesehen, an welchem der zwischen den beiden Greiffingern 2.1 und 2.2 gehaltene bzw. angeordnete Behälter 3 anliegt. Das Aufnahmeelement 24 kann dazu eine entsprechend der Behälterkontur angepasste Form 25 aufweisen.

In den Figuren 6 und 7 ist gezeigt, dass das jeweilige Transportelement 8, 9 noch eine stationäre Führungsbahn 26 hat, an welcher die Steuerelemente 13 relativ dazu entlang bewegt also z.B. abrollen können. Die stationäre Führungsbahn 26 ist vorteilhaft so ausgeführt und zu den Steuerelementen 13 angeordnet, dass die Greifelemente 2, also die Greiffinger an den jeweils innen liegenden Krafteinleitungselementen zur Anlage kommt, so dass der Greifbereich 11 beispielhaft sichelartig nach innen verbogen wird. So wird vorteilhaft erreicht, dass sich die Greifbereiche 11 selbstadaptiv durch Krafteinleitung der Krafteinleitungselemente 14, 15 und/oder des Behälters 3 in die Innenflanke 18 in der Halteposition 21 verbleiben. Die Greiffinger 2.1 und 2.2 sind zielführend mit dem Transportelement 8,9 verbunden und werden mit diesem zusammen bewegt, so dass sich jeweils die Relativbewegung zum einen zur Steuerschiene 16 und zum anderen zur Führungsbahn 26 ergibt, so dass die entsprechende Wirkung auf die selbstadaptiven Greifbereiche 11 ausgeübt wird. Die Greifbereiche 11 umfassen den Bauchbereich 4 des Behälters 3, wobei die freien Enden 17 beabstandet zum Behälter 3 sind. Wie in den Figuren 2 und 6 erkennbar, bewirkt die Steuerschiene 16 ein Verschwenken des Greiffingers in die entgegen gesetzte Richtung wie ein Verschwenken aufgrund der Führungsbahn 26, wobei das Steuerelement 13 durch die Steuerschiene 16 zum unteren Bildrand der Figur 2 gedrückt wird, während die Führungsbahn 26 ein nach oben gerichtetes Ausweichen bewirkt. So ergeben sich die unterschiedlichen Schwenkrichtungen des Basiselementes 10 welche die Greiffinger 2.1 und 2.2 an die Krafteinleitungselemente 14 oder 15 andrückt, so dass die Greiffinger, also die Greifbereiche 11 entweder in die Halteposition (Figur 6) oder in die Übergabe- oder Übernahmeposition (Figur 2) überführt werden, wenn der Kontakt mit dem betreffenden Krafteinleitungselementes besteht. Besteht kein Kontakt, ist der Greiffinger, also der Greifbereich in der Zwischenposition angeordnet.

Die in den Figuren dargestellten Abmessungen sind natürlich nicht maßstabsgerecht, wie auch schon zur Steuerschiene 16 erwähnt. In günstiger Ausgestaltung kann vorgesehen sein, die Greiffinger mit einer solchen Abmessung auszuführen, welche in einem Bereich von einem halben bis zum 1,5fachen des Behälterdurchmesser angeordnet ist, wobei als Standarddurchmesser der Behälterdurchmesser gewählt werden kann, welcher mit der Behälter- und Transportvorrichtung üblicher Weise behandelt und transportiert wird. Selbstverständlich ist die Erfindung nicht auf das dargestellte Ausführungsbeispiel beschränkt. Denkbar ist, dass die Krafteinleitungselemente 14, 15 in oder entgegen der Umfangsrichtung verfahrbar sind, so dass so die Kraft zur Verformung der Greiffinger 2.1, 2.2 eingeleitet wird. Möglich ist, dass ein geeigneter Hebelmechanismus vorgesehen wird, welcher bei einem Verschwenken des Basiselementes 10 relativ zum Steuerelement 13 entsprechend aktiviert werden kann. Selbstverständlich muss nicht unbedingt der Greifbereich selbstadaptiv, also z.B. elastisch sein. Würde z.B. ein Federstahl im Greifbereich verwendet, ist es sinnvoll die selbstadaptive Eigenschaft, also eine Elastizität beispielsweise im Basiselement 10 vorzusehen. Insofern kann der gesamte Greiffinger selbstadaptiv, also z.B. elastisch sein, und nicht nur alleine der Greifbereich oder nur alleine das Basiselement. Vorteilhaft wäre zum Beispiel bei schweren Behältern und/oder bei schnell laufenden Anlagen, den Greifbereich mit relativ wenig Flexibilität als starren Greifbereich auszuführen.

In nicht gezeigten vorteilhaften Ausführungsformen, bei ggf. engem Bauraum, sind Steuerelemente 10 vorgesehen, die vertikal in unterschiedlichen Höhen angeordnet sind und korrelierend hierzu, ebenfalls die Steuerschienen 16 und 26 in unterschiedlichen Höhenlagen angeordnete sind. Eine weitere Verbesserung besteht darin, dass an einem Basisteil (10) eines einzelnen Greiffinger 2.1, 2.2 mindestens zwei Steuerelemente 13 angeordnet sind, so dass die einzelnen Schwenkrichtungen bzw. die jeweilige Gegenbewegung auf sehr engerem Raum bzw. kurzer Strecke eingeleitet werden kann.

### Bezugszeichenliste

- 1: Behandlungs- und Transportvorrichtung
- 2: Greifelement/Greiffinger 2.1 und 2.2
- 3: Behälter
- 4: Bauchbereich
- 5: Mündungsöffnung
- 6: Halsbereich
- 7: Übergabebereich
- 8: Transportelement
- 9: Transportelement
- 10: Basiselement
- 11: Griffbereich
- 12: Basis
- 13: Steuerelement
- 14: Krafteinleitungselement
- 15: Krafteinleitungselement
- 16: Steuerschiene
- 17: Freies Ende
- 18: Innenflanke
- 19: Außenflanke
- 20: Gelenkstreben
- 21: Halteposition
- 22: Geöffnete Position
- 23: Zwischenposition
- 24: Aufnahmeelement
- 25: Vertiefung
- 26: Führungsbahn
- 27: Lagerachse von 13

## Patentansprüche

1. Verfahren zum greifenden Transport von Behältern (3) an einer Behandlungs- und Transportvorrichtung für Behälter (3) umfassend zumindest ein Greifelement (2) zum Halten oder Greifen eines Behälters (3), und umfassend zumindest einen Übergabebereich (7) von einem Transportelement (8,9) zu einem anderen Transportelement (8,9), **dadurch gekennzeichnet, dass** auf dem Transportelement (8,9) auf Höhe des Greifbereiches (11) und beabstandet zur Basis (12) beidseitig umlaufende Krafteinleitungselemente (14,15) so zueinander angeordnet sind, dass bei einer Schwenkbewegung eines Greiffingers (2.1 oder 2.2) mittels eines Steuerelementes (13) und eines Basiselementes (10) durch Zusammenwirken mit einer im Übergabebereich (7) angeordneten Steuerschiene (16, 26) eine Seite des Greifbereiches (11) gegen ein Krafteinleitungselement (14 oder 15) gedrückt wird und somit abhängig von einer vorherigen Schwenkbewegung um die Basis (12) eine sichelartige Öffnungs- oder Schließbewegung und/oder Öffnung- oder Schließverformung vollzieht.

2. Behandlungs- und Transportvorrichtung für Behälter (3) eingerichtet zur Durchführung des Verfahrens nach Anspruch 1, in der Form des um eine vertikale Achse umlaufenden stern- oder radförmigen Transportelementes (8,9), umfassend zumindest das und ebenfalls umlaufendes Greifelement (2) zum Halten oder Greifen des Containers oder Behälters (3), und umfassend zumindest den einen Übergabebereich (7) zur Überleitung von Behältern (3) von einem Transportelement (8,9) zu einem anderen, benachbarten Transportelement (8,9), wobei das mindestens eine Greifelement (2) mindestens zwei Greiffinger (2.1; 2.2) umfasst, welche je das Basiselement (10) und den Greifbereich (11) aufweisen, wobei der Greifbereich (11) mit seiner Basis (12) an dem radial außen liegenden Ende des Basiselementes (10) angeordnet ist, **dadurch gekennzeichnet, dass**
das Steuerelement (13) an dem gegenüberliegenden Ende des Basiselementes (10) angeordnet ist, wobei das Basiselement (10) um eine vertikale Achse schwenkbar gelagert oder linear verschieblich gelagert ist, und weiterhin in Umfangsrichtung neben dem Greifbereich (11) der Greiffinger (2.1, 2.2) und radial außen beabstandet zur Basis (12), mit umlaufende Krafteinleitungselemente (14,15) angeordnet sind, und weiterhin in dem Übergabebereich (7) nicht umlaufende Steuerschienen (16, 26) derart angeordnet sind, dass mindestens ein Steuerelement (13) eines Greiffingers (2.1, 2.2) mit diesen kontaktierbar ist, und das Basiselement (10) hierdurch je nach relativer Lage der Steuerschiene (16, 26) zum jeweiligen Steuerelement (13) verschwenkbar oder linear verschieblich ist.

3. Behandlungs- und Transportvorrichtung nach Anspruch 2, **dadurch gekennzeichnet, dass** das Basiselement (10) an dem Transportelement (8,9) angeordnet ist, und aufweisend zwei Übergabebereiche.

4. Behandlungs- und Transportvorrichtung nach Anspruch 2 oder 3, **dadurch gekennzeichnet, dass** das Greifelement (2) aus einem Paar voneinander gegenüberliegend angeordneten Greiffingern (2.1, 2.2) gebildet ist, welche einander gegenüberstehen.

5. Behandlungs- und Transportvorrichtung nach einem der Ansprüche 2 bis 4, **dadurch gekennzeichnet, dass** der Greifbereich (11) selbstadaptive Eigenschaften hat, insbesondere indem die Greiffinger (2.1, 2.2) selbstadaptive Greiffinger sind oder indem das Basiselement (10) mindestens teilweise elastisch ausgeformt ist oder aus einem elastischen Material besteht.

6. Behandlungs- und Transportvorrichtung nach einem der Ansprüche 2 bis 5, **dadurch gekennzeichnet, dass** das Greifelement (2) mit seinem Basiselement (10) und seinem Greifbereich (11) L-förmig ausgeführt ist, wobei das Basiselement (10) einen Quersteg bildet, an dem die Basis (12) des Greifbereiches (11) angeordnet ist.

7. Behandlungs- und Transportvorrichtung nach einem der Ansprüche 2 bis 6, **dadurch gekennzeichnet, dass** mindestens zwei Steuerelemente (13) vertikal in unterschiedlichen Höhen angeordnet sind und korrelierend hierzu, ebenfalls mindestens zwei Steuerschienen (16) in unterschiedlichen Höhenlagen angeordnete sind.

8. Behandlungs- und Transportvorrichtung nach einem der Ansprüche 2 bis 7, **dadurch gekennzeichnet, dass** an einem Basisteil (10) eines Greiffingers (2.1, 2.2) mindestens zwei Steuerelemente (13) angeordnet sind.

9. Behandlungs- und Transportvorrichtung nach einem der Ansprüche 2 bis 8, **dadurch gekennzeichnet, dass** die Steuerschiene (16) eine solche Erstreckung hat, dass nur einer der Greiffinger (2.1, 2.2) des Greifelementes (2) in Kontakt mit der Steuerschiene (16) ist.

10. Behandlungs- und Transportvorrichtung nach einem der Ansprüche 2 bis 9, **dadurch gekennzeichnet, dass** das Steuerelement (13) als Rolle ausgeführt ist.

11. Behandlungs- und Transportvorrichtung nach einem der Ansprüche 2 bis 10, **gekennzeichnet durch** ein Aufnahmeelement (24), welches zwischen Greiffingern (2.1, 2.2) des Greifelementes (2) angeordnet ist.

12. Behandlungs- und Transportvorrichtung nach einem der Ansprüche 2 bis 11, **dadurch gekennzeichnet, dass** das Transportelement (8,9) eine stationäre Führungsbahn (26) aufweist, an welcher das Steuerelement (13) relativ dazu entlang bewegt wird, wenn sich das Transportelement (8,9) in Transportrichtung bewegt, wobei die Greiffinger (2.1; 2.2) in einer Halteposition (21) angeordnet sind.

13. Behandlungs- und Transportvorrichtung nach einem der Ansprüche 2 bis 12, **dadurch gekennzeichnet, dass** der Greifbereich (11) von seiner Basis (12) zu seinem freien Ende (17) kegelförmig oder spitz ausgeführt ist.

14. Behandlungs- und Transportvorrichtung nach einem der Ansprüche 2 bis 13, **dadurch gekennzeichnet, dass** der Greifbereich (11) eine Außenflanke (19) und eine Innenflanke (18) aufweist, zwischen denen Gelenkstreben (20) angeordnet sind.

15. Behandlungs- und Transportvorrichtung nach einem der Ansprüche 2 bis 14, **dadurch gekennzeichnet, dass** der Greifbereich (11) zumindest an seiner Innenflanke (18) mehrschichtig ausgeführt ist, wobei dieser zumindest an seiner Innenflanke (18) an seiner inneren Schicht dehnbarer als eine mit dem Behälter (3) in Kontakt tretende Schicht ausgeführt ist, und wobei der Greifbereich (11) zumindest an seiner Innenflanke (18) an seiner inneren Schicht Erhöhungen und Vertiefungen aufweist

## Claims

1. Method for transporting containers (3) with gripping action on a handling and transporting device for containers (3), comprising at least one gripping element (2) for holding or gripping a container (3), and comprising at least one transfer region (7) from one transport element (8,9) to another transport element (8,9), **characterised in that**, on the transport element (8,9), force-introducing elements (14,15), circulating on both sides at the height of the gripping area (11) and at a spacing distance from the base (12) are arranged relative to one another in such a way that, at a pivoting movement of a gripping finger (2.1 or 2.2) by means of a control element (13) and a base element (10), by interaction with a control rail (16, 26) arranged in the transfer region (7), one side of the gripping region (11) is pressed against a force-introducing element (14 or 15), and therefore, dependant on a previous pivoting movement about the base (12), a sickle-shaped opening or closing movement and/or opening or closing deformation is carried out.

2. Handling and transporting apparatus for containers (3), configured for carrying out the method according to claim 1, in the form of the star or wheel-shaped transport element (8,9), circulating about a vertical axis, comprising at least the gripping element (2), likewise circulating, for holding or gripping the container (3), and comprising at least the one transfer region (7) for transferring containers (3) from one transport element (8,9) to another, adjacent, transport element (8,9), wherein the at least one gripping element (2) comprises at least two gripping fingers (2.1; 2..2), which in each case comprise the base element (10) and the gripping region (11), wherein the gripping region (11) is arranged with its base (12) at the radially outward located end of the base element (10), **characterised in that**
the control element (13) is arranged at the opposite end of the base element (10), wherein the base element (10) is mounted such as to pivot about a vertical axis, or is mounted such as to be displaced in a linear direction, and, moreover, in the circumferential direction, next to the gripping region (11) of the gripping fingers (2.1, 2.2) and spaced at a distance outwards relative to the base (12), circulating force-introducing elements (14, 15) are arranged, and, moreover, in the transfer region (7), non-circulating control rails (16, 26) are arranged, in such a way that at least one control element (13) of a gripping finger (2.1, 2.2) can come in contact with this, and, as a result of this, depending on the relative position of the control rails (16, 26) to the respective control element (13), the base element (10) can be pivoted or displaced in a linear direction.

3. Handling and transport apparatus according to claim 2, **characterised in that** the base element (10) is arranged at the transport element (8,9) and comprises two transfer regions.

4. Handling and transport apparatus according to claim 2 or 3, **characterised in that** the gripping element (2) is formed from a pair of gripping fingers (2.1, 2.2) arranged opposite one another, with said gripping fingers opposing one another.

5. Handling and transport apparatus according to any one of claims 2 to 4, **characterised in that** the gripping region (11) has self-adaptive properties, in particular **in that** the gripping fingers (2.1, 2.2) are self-adaptive gripping fingers, or **in that** the base element (10) is at least partially elastically formed or consists of an elastic material.

6. Handling and transport apparatus according to one of claims 2 to 5, **characterized in that** the gripping element (2), with its base element (10) and its gripping region (11) are configured as L-shaped, wherein the base element (10) forms a transverse web, at which the base (12) of the gripping region (11) is arranged.

7. Handling and transport apparatus according to any one of claims 2 to 6, **characterised in that** at least two control elements (13) are arranged vertically at different heights, and, correlating to these, likewise at least two control rails (16) are arranged at different height locations.

8. Handling and transport apparatus according to any one of claims 2 to 7, **characterised in that,** arranged at a base part (10) of a gripping finger (2.1, 2.2) are at least two control elements (13).

9. Handling and transport apparatus according to any one of claims 2 to 8, **characterized in that** the control rails (16) have such an extension that only one of the gripping fingers (2.1, 2.2) of the gripping element (2) is in contact with the control rails (16).

10. Handling and transport apparatus according to any one of claims 2 to 9, **characterised in that** the control element (13) is configured as a roller.

11. Handling and transport apparatus according to any one of claims 2 to 10, **characterised by** an accommodation element (24), which is arranged between gripping fingers (2.1, 2.2) of the gripping element (2).

12. Handling and transport apparatus according to any one of claims 2 to 11, **characterised in that** the transport element (8, 9) comprises a stationary guide track (26), on which the control element (13) is moved along relative to this when the transport element (8, 9) moves in the transport direction, wherein the gripping fingers (2.1, 2.2) are arranged in a holding position (21).

13. Handling and transport apparatus according to any one of claims 2 to 12, **characterised in that** the gripping region (11) is configured, from its base (12) to its free end (17), as conical or tapered to a point.

14. Handling and transport apparatus according to any one of claims 2 to 13, **characterised in that** the gripping region (11) comprises an outer flank (19) and an inner flank (18), between which joint struts (20) are arranged.

15. Handling and transport apparatus according to any one of claims 2 to 14, **characterised in that** the gripping region (11), at least on its inner flank (18), is configured as multi-layered, and wherein, at least on its inner flank (18), it is configured on its inner layer as more extendable than a layer which comes in contact with the container (3), and wherein the gripping region (11) comprises, at least on its inner flank (18), elevations and depressions on its inner layer.

## Revendications

1. Procédé servant au transport par préhension de contenants (3) au niveau d'un dispositif de manutention et de transport pour des contenants (3) comprenant au moins un élément de préhension (2) servant à maintenir ou à saisir un contenant (3), et comprenant au moins une zone de transfert (7) depuis un élément de transport (8, 9) vers un autre élément de transport (8, 9), **caractérisé en ce que** des éléments d'application de force (14, 15) périphériques des deux côtés sont disposés les uns par rapport aux autres sur l'élément de transport (8, 9) à hauteur de la zone de préhension (11) et à distance de la base (12) de telle sorte qu'un côté de la zone de préhension (11) est poussé contre un élément d'application de force (14 ou 15) lors d'un mouvement de pivotement d'un doigt de préhension (2.1 ou 2.2) au moyen d'un élément de commande (13) et d'un élément de base (10) par coopération avec un rail de commande (16, 26) disposé dans la zone de transfert (7) et exécute, ce faisant, indépendamment d'un mouvement de pivotement précédent autour de la base (12), un mouvement d'ouverture ou de fermeture de type croissant et/ou une déformation d'ouverture ou de fermeture.

2. Dispositif de manutention et de transport pour des contenants (3) configuré pour la mise en oeuvre du procédé selon la revendication 1, sous la forme de l'élément de transport (8, 9) présentant une forme d'étoile ou une forme de roue tournant autour d'un axe vertical, comprenant au moins l'élément de préhension (2) également tournant servant à maintenir ou à saisir le conteneur ou le contenant (3), et comprenant au moins une zone de transfert (7) servant à transférer des contenants (3) depuis un élément de transport (8, 9) vers un autre élément de transport (8, 9) adjacent, sachant que l'élément de préhension (2) au moins au nombre de un comprend au moins deux doigts de préhension (2.1 ; 2.2), lesquels présentent respectivement l'élément de base (10) et la zone de préhension (11), sachant que la zone de préhension (11) est disposée par sa base (12) au niveau de l'extrémité, située radialement à l'extérieur, de l'élément de base (10), **caractérisé en ce**
**que** l'élément de commande (13) est disposé au niveau de l'extrémité opposée de l'élément de base (10), sachant que l'élément de base (10) est monté de manière à pouvoir pivoter autour d'un axe vertical ou est logé de manière à pouvoir coulisser linéairement, et en ce que par ailleurs le doigt de préhension (2.1, 2.2.) et des éléments d'application de force (14, 15) entraînés en rotation avec ce dernier radialement à l'extérieur à distance de la base (12) sont disposés dans la direction périphérique à côté de la zone de préhension (11), et en ce que par ailleurs des rails de commande (16, 26) non tournant sont disposés dans la zone de transfert (7) de telle manière qu'au moins un élément de commande (13) d'un doigt de préhension (2.1, 2.2) peut être amené en contact avec lesdits rails de commande, et en ce que l'élément de base (10) peut pivoter ou être coulissé de manière linéaire de ce fait par rapport à l'élément de commande (13) respectif selon la position relative du rail de commande (16, 26).

3. Dispositif de manutention et de transport selon la revendication 2, **caractérisé en ce que** l'élément de base (10) est disposé au niveau de l'élément de transport (8, 9), et **en ce qu'**il présente deux zones de transfert.

4. Dispositif de manutention et de transport selon la revendication 2 ou 3, **caractérisé en ce que** l'élément de préhension (2) est formé à partir d'une paire de doigts de préhension (2.1, 2.2) opposés l'un l'autre, lesquels se font face l'un l'autre.

5. Dispositif de manutention et de transport selon l'une quelconque des revendications 2 à 4, **caractérisé en ce que** la zone de préhension (11) présente des propriétés auto-adaptatives, en particulier du fait que les doigts de préhension (2.1, 2.2) sont des doigts de préhension auto-adaptatifs ou du fait que l'élément de base (10) est formé au moins en partie de manière élastique ou est constitué d'un matériau élastique.

6. Dispositif de manutention et de transport selon l'une quelconque des revendications 2 à 5, **caractérisé en ce que** l'élément de préhension (2) est réalisé de manière à présenter une forme de L avec son élément de base (10) et sa zone de préhension (11), sachant que l'élément de base (10) forme une entretoise transversale, au niveau de laquelle la base (12) de la zone de préhension (11) est disposée.

7. Dispositif de manutention et de transport selon l'une quelconque des revendications 2 à 6, **caractérisé en ce qu'**au moins deux éléments de commande (13) sont disposés de manière verticale à différentes hauteurs, et **en ce qu'**en corrélation, au moins deux rails de commande (16) sont de la même manière disposés dans des positions à des hauteurs différentes.

8. Dispositif de manutention et de transport selon l'une quelconque des revendications 2 à 7, **caractérisé en ce qu'**au moins deux éléments de commande (13) sont disposés au niveau d'une partie de base (10) d'un doigt de préhension (2.1, 2.2).

9. Dispositif de manutention et de transport selon l'une quelconque des revendications 2 à 8, **caractérisé en ce que** le rail de commande (16) présente une extension telle que seul un des doigts de préhension (2.1, 2.2) de l'élément de préhension (2) est en contact avec le rail de commande (16).

10. Dispositif de manutention et de transport selon l'une quelconque des revendications 2 à 9, **caractérisé en ce que** l'élément de commande (13) est réalisé sous la forme d'un rouleau.

11. Dispositif de manutention et de transport selon l'une quelconque des revendications 2 à 10, **caractérisé par** un élément de réception (24), qui est disposé entre des doigts de préhension (2.1, 2.2) de l'élément de préhension (2).

12. Dispositif de manutention et de transport selon l'une quelconque des revendications 2 à 11, **caractérisé en ce que** l'élément de transport (8, 9) présente une voie de guidage (26) stationnaire, au niveau de laquelle l'élément de commande(13) est déplacé par rapport à cette dernière en longueur lorsque l'élément de transport (8, 9) se déplace dans la direction de transport, sachant que les doigts de préhension (2.1, 2.2) sont disposés dans une position de maintien (21).

13. Dispositif de manutention et de transport selon l'une quelconque des revendications 2 à 12, **caractérisé en ce que** la zone de préhension (11) est réalisée, depuis sa base (12) en direction de son extrémité (17) libre, de manière à présenter une forme conique ou de manière pointue.

14. Dispositif de manutention et de transport selon l'une quelconque des revendications 2 à 13, **caractérisé en ce que** la zone de préhension (11) présente un flanc extérieur (19) et un flanc intérieur (18), entre lesquels sont disposées des entretoises d'articulation (20).

15. Dispositif de manutention et de transport selon l'une quelconque des revendications 2 à 14, **caractérisé en ce que** la zone de préhension (11) est réalisée, au moins au niveau de son flanc intérieur (18), de manière multicouche, sachant que ladite zone de préhension est réalisée au moins au niveau de son flanc intérieur (18), au niveau de sa couche intérieure, de manière plus extensible qu'une couche arrivant en contact avec le contenant (3), et sachant que la zone de préhension (11) présente au moins au niveau de son flanc intérieur (18), au niveau de sa couche intérieure, des parties surélevées et des creux.
